# EUROPEAN PATENT SPECIFICATION

(11) **EP 0 713 455 B1**
(45) Date of publication and mention of the grant of the patent: **19.11.1997**
(21) Application number: 94925069.0
(22) Date of filing: 22.08.1994
(51) Int. Cl.: B60P 1/44

(54) **A DEVICE IN A VEHICLE LOADING RAMP**
VORRICHTUNG IN EINER LADEBORDWAND
SYSTEME DE PLATE-FORME DE CHARGEMENT POUR VEHICULE

(30) Priority: 20.08.1993 SE 9302702
(43) Date of publication of application: 29.05.1996
(73) Proprietor: CRESCENDO AB, S-831 02 Östersund (SE)
(72) Inventor: THORESSON, Eddie, S-831 02 Östersund (SE)
(74) Representative: Karlsson, Leif Karl Gunnar
(86) International application number: SE9400766
(87) International publication number: WO9505955

(56) References cited:
- EP-A- 0 373 702
- CH-A- 516 420
- DE-A- 3 940 813

## Description

### Technical field

The present invention relates to a loading ramp which is mounted on a vehicle so that it can be pivoted around an axis perpendicular to the longitudinal axis of the vehicle by a first driving device between a first position, wherein the loading ramp does not extend from the vehicle and forms a back wall thereon, and a second position, wherein the loading ramp extends from the vehicle and takes up a substantially horizontal position. In its second position the ramp forms a connection device between the floor of the loading compartment of the vehicle and a loading bridge. The ramp can usually be lowered to take up a horizontal position near a ground.

### State of the art

Such prior art loading ramps as described above are well known. A problem which is often encountered when a load is to be transferred from the vehicle to a loading bridge, or vice versa, for instance via a piler truck, is that the distance between the ramp and the bridge will be to long. This problem is especially evident in the case the load shall be transferred to a bridge parallel to the vehicle, because the vehicle often cannot be driven closely to the bridge. In order that the transfer of the load can be performed a lose plate must be placed between and overlap the ramp and the bridge. This measure is troublesome and means that the person performing the loading/unloading will be exposed to damage risks.

Through DE, A 3 940 813 a loading ramp is known which is arranged along one longitudinal side of a vehicle and which is displaceable in the longitudinal direction of the vehicle. The loading ramp is complicated and is driven by means of supporting wheels bearing on the ground and on rods, respectively, running along the longitudinal side of the vehicle. The loading ramp cannot be arranged on the back side of the vehicle because its frame must be supported on the ground.

Through EP, A 373 702 a loading ramp is known which is displaceable between a position on the back side of the vehicle and a position on its longitudinal side. The displacement is performed by a wheel-rail construction acting between the upper part of the vehicle and a frame. The loading ramp is pivotally mounted on an element vertically displaceable on a lower portion of the frame. The vertical parts of the frame prevent loading and unloading when the loading ramp has been displaced sidewards. Further, the construction is space-requiring and difficult of access.

Through CH, A 516 420 a loading ramp is known which is pivotable around a vertical axis from a position behind the vehicle to a position along the longitudinal side of the vehicle. Loading and unloading are not possible from behind when the ramp has been pivoted.

### Disclose of the invention

It is an object of the present invention to improve known vehicle loading ramps of the kind described above and to obtain a simple device which makes it possible to load/unload a vehicle, without the help of lose plates and the like, even if the vehicle is at a distance from a loading bridge.

This object is fulfilled by the device according to the invention by means of the features stated in the characterising parts of the claims.

### Description of the drawings

Fig. 1 is a schematic top view of a loading vehicle with a loading ramp according to the invention to/from which a load is to be transferred from/to a loading bridge which is also shown,
Fig. 2 is a perspective view obliquely from behind of the loading ramp in Figure 1 in a first uplifted position,
Fig. 3 is a plane top view of the loading ramp in Figures 1 and 2 in an open second position which is displaced sidewards in relation to the vehicle, and
Figs. 4 and 5 are two side views of the loading ramp in the second position shown in Figure 3, the views being seen from opposite directions.

### Preferred embodiments

Goods are intended to be transferred from and to a loading bridge 1 of a building 2 to and from, respectively, a loading vehicle 3. The vehicle 3 is situated at a distance from the bridge 1 because it is often very difficult to manoeuver the vehicle to a position closely thereto. The vehicle 3 is positioned substantially parallel to the bridge 1. A loading ramp 4 carried by the vehicle 3 is shown horizontal and displaced sidewards in relation thereto so that one of its side edges contacts or is close to the bridge 1.

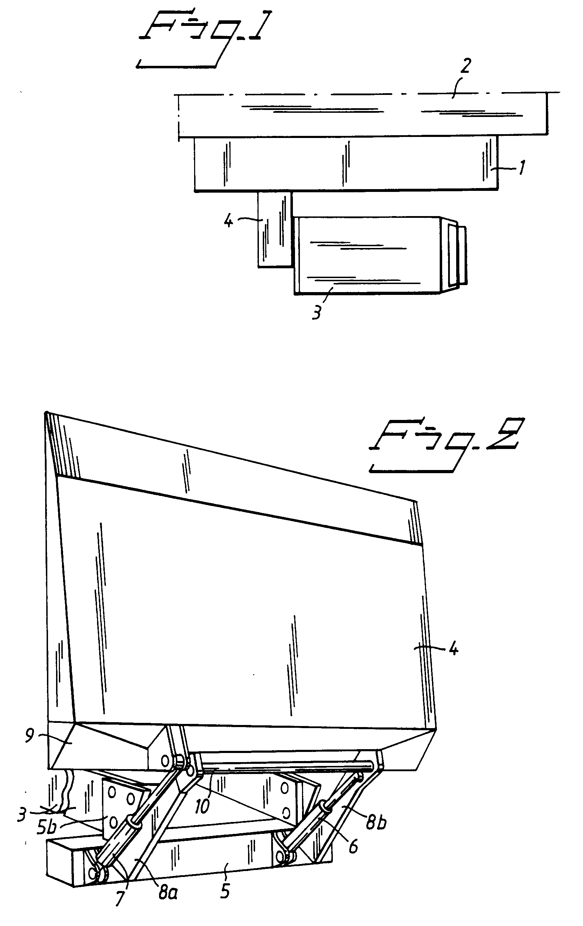

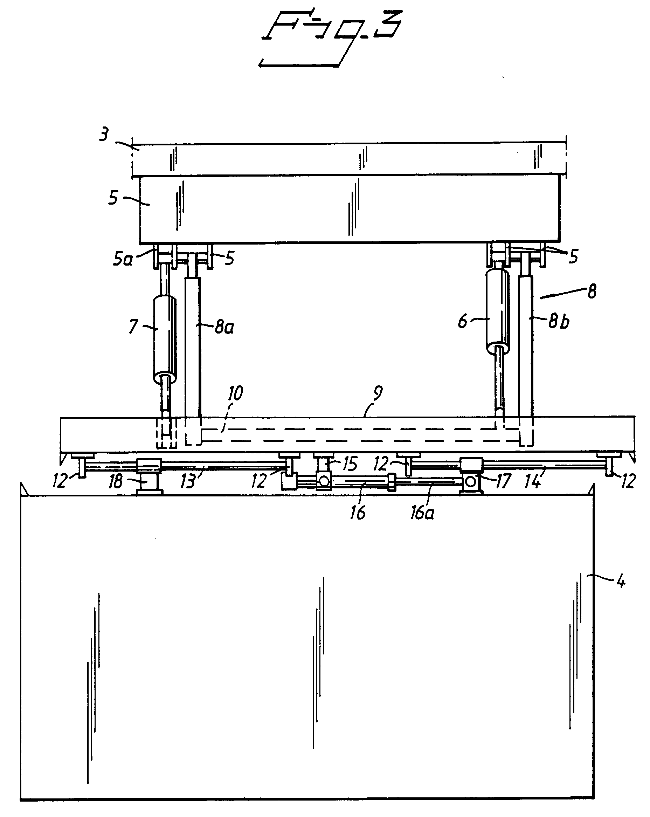

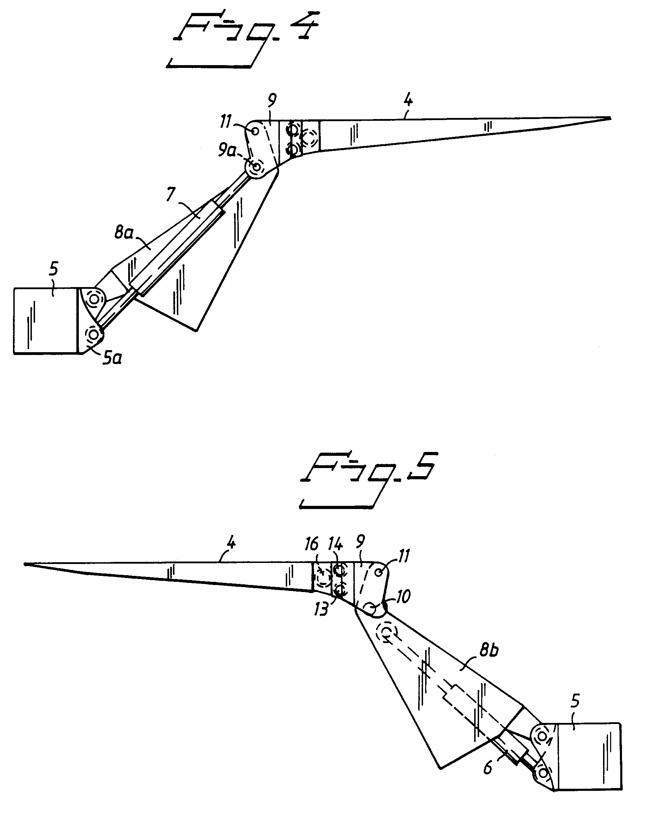

In Figures 2 - 5 the loading ramp 4 is shown and in Figure 2 and 3 it is shown how it is connected to the vehicle 3.

On the rear portion of the chassis of the vehicle 3 a box girder 5 and a plate 5b welded thereto are mounted, for instance by means of bolts. The box girder 5 carries the ramp 4 and all its manoeuvering means and forms together with these means, a unit which is mountable/demountable on and from, respectively, the vehicle. The girder 5 is provided with attachment ears 5a on which a pneumatic/hydraulic lift cylinder device 6 and a pneumatic/hydraulic tip cylinder device 7 are pivotably mounted. The other end of the lift cylinder device 6 is pivotably connected to a yoke 8. The other end of the tip cylinder device 7 is, at 9a, pivotably mounted on a beam 9 which is parallel to the box girder 5. The beam 9 extends substantially over the whole width of the vehicle 3 and has an upper side which is in essentially the same plane as the loading surface of the ramp 4. The beam 9 is fastened to the vehicle and forms a portion of the ramp 4 during loading and unloading. The beam 9 is pivotably connected to the yoke 8 at 11. The yoke 8 includes two legs 8a and 8b which are pivotably connected to the box girder 5 and which are united by means of a shaft 10. The cylinder device 6 is pivotably connected to the leg 8b of the yoke 8.

The beam 9 is provided with four attachment ears 12 in which two shafts 13 and 14 are mounted. In one of the ears 12 and in a further attachment element 15 on the beam 9 a pneumatic/hydraulic cylinder device 16 is mounted. The piston rod 16a of the device 16 is connected to an attachment element 17 which is fasted to the ramp 4. The element 17 also constitutes a bearing (gliding bearing) for the shaft 14. A further attachment element 18 is fastened to the ramp 4 and constitutes a bearing for the shaft 13.

The function of the device according to the invention will know be described.

In its unactivated position the ramp 4 takes up the position shown in Figure 2 in which it completely or partly covers the rear opening of the loading compartment of the vehicle. If the ramp 4 is to be opened to a horizontal position in the same plane as the floor of the loading compartment the tip cylinder device 7 is activated, for instance from the driving compartment of the vehicle, so that it will be shortened, whereby it turns the beam 9, via the connection point 9a, around the shaft 11 and thus the ramp 4 to the horizontal position shown in Figures 3 - 5.

If the ramp 4 is to be displaced downwards in relation to the vehicle from its position, shown in Figures 4 and 5, to a position wherein its under side bears against the ground, for instance, the lift cylinder device 6 is activated from the driving compartment, for instance, so that it will be shortened, whereby it turns the yoke leg 8b and thus the whole yoke 8 downwards (counter-clockwise in Figure 5) around the fastening points of the yoke in the box girder 5. In order to maintain the horizontal position of the ramp 4 the tip cylinder device 7 is activated at the same time.

In order to displace the ramp 4 sidewards from the position in Figure 2 to the position in Figures 1 and 3 the cylinder device 16 is activated so that the portion of its piston rod 16a protruding from the cylinder will be shortened or extended. If this portion is shortened the ramp 4 will be displaced to the left in Figures 2 and 3, and if it is extended the ramp will be displaced to the right in these Figures. During this displacement the ramp 4 is guided linearly by the shafts 13 and 14 on the beam 9. The ramp 4 can be displaced sidewards in relation to the vehicle independently of which hight and pivoting position it takes up. The displacement sidewards can also be performed during simultaneous lifting/lowering and /or pivoting upwards/downwards of the ramp.

As can be seen i Figure 1 the ramp is displaced sidewards so that it overlaps the vehicle 3 and the bridge 1 despite the fact that the vehicle is at a distance from the bridge. The displacement sidewards of the ramp can also be advantageous during loading/unloading of the vehicle straight from behind, i. e. when the vehicle is positioned substantially in right angle to the bridge, because possible deviation from the right angle can be compensated by a displacement sidewards of the ramp which causes that a part of the ramp will come closer to and possibly overlaps the bridge.

Even if only one embodiment of the invention has been described above and shown on the drawings it should be understood that the invention is not limited to this embodiment but only by that which is stated in the claims.

## Claims

1. A device in a vehicle loading ramp (4) which is mounted on a vehicle (3) so that it can be pivoted around an axis perpendicular to the longitudinal axis of the vehicle by a first driving device (7) between a first position, in which the loading ramp does not extend from the vehicle and forms a back wall thereon, and a second position, in which the loading ramp extends from the vehicle and takes up a substantially horizontal position, characterized in that the device includes a second driving device (16) for displacement of the loading ramp (4) in a direction perpendicularly to the longitudinal axis of the vehicle (3), said driving device acting between the loading ramp and a beam (9) which is not displaceable in the last mentioned direction and which forms a portion of the loading ramp.

2. A device according to claim 1, characterized in that the loading ramp (4) is mounted on the beam (9) for linear movement in relation thereto and that one side of the beam is in substantially the same plane as the loading surface of the loading ramp.

3. A device according to claim 1 or 2, characterized in that the beam (9) is connected to the first driving device (7) and a third driving device (6) for vertical displacement of the beam (9) and thus the loading ramp.

4. A device according to any of the preceding claims, characterized in that the loading ramp (4), the beam (9) and all driving devices (6, 7, 16) form a unit which is loosely mounted on the vehicle (3).

5. A device according to any of claims 2 - 4, characterized in that the second driving device includes at least one piston-cylinder device (16) acting between the beam (9) and the loading ramp (4) and that the loading ramp is displaceable along the beam in bearings (12 - 15, 17, 18) fastened thereto.

6. A device according to claim 5, characterized in that the bearings comprise rods (13, 14) mounted on the beam (9) or the loading ramp (4) and glide bearings (17, 18) mounted on the loading ramp and the beam, respectively.

## Patentansprüche

1. Eine Vorrichtung in einer Ladebordwand (4) eines Fahrzeugs, die so auf einem Fahrzeug (3) gelagert ist, daß sie durch eine erste Antriebsvorrichtung (7) um eine Achse senkrecht zur Längsachse des Fahrzeugs zwischen einer ersten Postion, in der sich die Ladebordwand nicht vom Fahrzeug weg erstreckt und auf diesem eine Rückwand bildet, und einer zweiten Position, in der sich die Ladebordwand vom Fahrzeug weg erstreckt und eine im wesentlichen horizontale Position einnimmt, geschwenkt werden kann, dadurch **gekennzeichnet,** daß die Vorrichtung eine zweite Antriebsvorrichtung (16) zur Verschiebung der Ladebordwand (4) in eine Richtung senkrecht zur Längsachse des Fahrzeugs (3) aufweist, wobei die Antriebsvorrichtung zwischen der Ladebordwand und einem Träger (9) wirkt, der nicht in die letztgenannte Richtung verschiebbar ist und die einen Teil der Ladebordwand bildet.

2. Vorrichtung nach Anspruch 1, dadurch gekennzeichnet, daß die Ladebordwand (4) zur linearen Bewegung im Verhältnis zum Träger (9) auf diesem gelagert ist, und daß sich eine Seite des Trägers in im wesentlichen derselben Ebene wie die Ladefläche der Ladebordwand befindet.

3. Vorrichtung nach Anspruch 1 oder 2, dadurch gekennzeichnet, daß der Träger (9) zur vertikalen Verschiebung des Trägers (9) und somit der Ladebordwand mit der ersten Antriebsvorrichtung (7) und einer dritten Antriebsvorrichtung (6) verbunden ist.

4. Vorrichtung nach einem der vorhergehenden Ansprüche, dadurch gekennzeichnet, daß die Ladebordwand (4), der Träger (9) und alle Antriebsvorrichtungen (6, 7, 16) eine Einheit bilden, die beweglich auf dem Fahrzeug (3) gelagert ist.

5. Vorrichtung nach einem der Ansprüche 2 - 4, dadurch gekennzeichnet, daß die zweite Antriebsvorrichtung mindestens eine Kolben-Zylinder-Vorrichtung (16) aufweist, die zwischen dem Träger (9) und der Ladebordwand (4) wirkt, und daß die Ladebordwand entlang des Trägers in an diesem befestigten Lagern (12 - 15, 17, 18) verschiebbar ist.

6. Vorrichtung nach Anspruch 5, dadurch gekennzeichnet, daß die Lager Stäbe (13, 14), die auf dem Träger (9) oder der Ladebordwand (4) gelagert sind, und Gleitlager (17, 18) aufweisen, die auf der Ladebordwand bzw. dem Träger gelagert sind.

## Revendications

1. Dispositif présent dans une plate-forme (4) de chargement de véhicule, qui est monté sur un véhicule (3) de telle sorte qu'il soit possible de le faire pivoter autour d'un axe perpendiculaire à l'axe longitudinal du véhicule, au moyen d'un premier dispositif d'entraînement (7), entre une première position dans laquelle la plate-forme de chargement ne dépasse pas du véhicule et constitue une paroi arrière sur celui-ci, et une deuxième position, dans laquelle la plate-forme de chargement dépasse du véhicule et se trouve sensiblement à l'horizontale, caractérisé en ce que le dispositif comprend un deuxième dispositif d'entraînement (16) servant au déplacement de la plate-forme (4) de chargement dans une direction perpendiculaire à l'axe longitudinal du véhicule (3), ce dispositif d'entraînement agissant entre la plate-forme de chargement et un longeron (9) qui ne peut pas être déplacé dans la dernière direction et qui fait partie de la plate-forme de chargement.

2. Dispositif selon la revendication 1, caractérisé en ce que la plate-forme de chargement (4) est montée sur le longeron (9) afin de pouvoir effectuer un déplacement linéaire par rapport à celui-ci, et en ce qu'un côté du longeron se trouve sensiblement dans le même plan que la surface de chargement de la plate-forme de chargement.

3. Dispositif selon la revendication 1 ou 2, caractérisé en ce que le longeron (9) est relié au premier dispositif d'entraînement (7) et à un troisième dispositif d'entraînement (6), pour un déplacement vertical du longeron (9), et est ainsi relié à la plate-forme de chargement.

4. Dispositif selon l'une quelconque des revendications précédentes, caractérisé en ce que la plate-forme de chargement (4), le longeron (9) et tous les dispositifs d'entraînement (6, 7, 16) forment une unité qui est montée de façon non-rigide sur le véhicule (3).

5. Dispositif selon l'une quelconque des revendications 2-4, caractérisé en ce que le deuxième dispositif d'entraînement comprend au moins un ensemble piston-cylindre (16) agissant entre le longeron (9) et la plate-forme de chargement (4), et en ce que la plate-forme de chargement est susceptible de se déplacer le long du longeron dans des paliers (12-15, 17, 18) qui y sont fixés.

6. Dispositif selon la revendication 5, caractérisé en ce que les paliers comprennent des tiges (13, 14) montées sur le longeron (9) ou la plate-forme de chargement (4) et des paliers glissants (17, 18) montés sur la plate-forme de chargement et le longeron, respectivement.
